# FASCICULE DE BREVET EUROPEEN

(11) **EP 1 790 544 B1**
(45) Date de publication et mention de la délivrance du brevet: **09.03.2016**
(21) Numéro de dépôt: 06301187.8
(22) Date de dépôt: 28.11.2006
(51) Int. Cl.: B60T 13/66, B60T 17/22, B60T 13/68, B60T 13/36

(54) **Perfectionnements aux equipements montés à l'arrière d'un train et utilisation asscociées**
Verbesserungen von am Zugende montierten Einheiten und entsprechende Verwendung
Improvements of end-of-train units and associated uses

(30) Priorité: 28.11.2005 FR 0553629
(43) Date de publication de la demande: 30.05.2007
(73) Titulaire: KNORR-BREMSE SYSTEMES FERROVIAIRES FRANCE SA, 51100 Reims (FR)
(72) Inventeur: Mus, Yves, 77450 Montry (FR); Guillaumin, Bruno, 75017 Paris (FR); Gendron, Fabrice, 35340 Erce Pres Liffre (FR); Couturier, Christophe, 35690 Acigne (FR)
(74) Mandataire: Michelet, Alain

(56) Documents cités:
- EP-A- 0 941 904
- US-A- 5 918 634
- US-A- 6 036 282

## Description

L'invention a pour domaine celui de la sécurité ferroviaire et de son amélioration en particulier en ce qui concerne les trains de fret. L'invention porte sur des dispositifs dits équipements de queue de train (EQT dans ce qui suit) fixés sur l'arrière du dernier wagon d'un train.

Historiquement, un EQT est simplement un feu, par exemple rouge, ou l'équivalent, disposé sur le dernier wagon d'un train. Ce dispositif permet entre autres à la gare responsable d'une section de voie, de constater la présence du feu indicatif du dernier wagon d'un train pour être sûr de l'intégrité de ce dernier. Ce dispositif permet également au mécanicien d'un train suivant de détecter la présence d'un train au devant de sa locomotive.

De nos jours, il a été proposé de rendre les EQT actifs pour qu'ils remplissent un certain nombre de fonctions relatives à la sécurité en générale, et, en particulier, qu'ils participent au freinage du train pour améliorer la sécurité d'utilisation de ce dernier.

Ainsi, le document US-5918634 est relatif à un EQT comportant un microprocesseur, un premier transducteur capable de mesurer la pression dans la conduite générale, un second transducteur capable de mesurer la pression dans une canalisation secondaire, des vannes électromagnétiques d'évacuation et d'alimentation, un réservoir de pression et un dispositif de régulation de la pression dans la conduite générale. Les différentes utilisations ou modes de fonctionnement de cet EQT sont décrits. Par exemple, dans le cas d'un freinage, parallèlement à la vidange de la conduite générale qui est initiée au niveau de la locomotive, une commande de freinage est transmise par radio au microprocesseur. En réponse, ce dernier provoque une mise en communication de la conduite générale avec l'atmosphère.

De manière similaire, le document EP-0941904 A2 divulgue un ensemble composé d'un équipement de queue de train et d'un équipement de tête de train, destinés à fonctionner ensemble. Ces deux dispositifs équipés de microprocesseurs communiquent entre eux par des moyens radio. Le système informatique formé de ces dispositifs est, selon ce document, une machine d'états passant d'un état à l'autre lors de la réalisation de certaines conditions. Mais dans tous les états d'utilisation, c'est bien le dispositif de tête de train qui contrôle l'équipement de queue de train par la transmission d'informations par voie hertzienne.

Mais les efforts entrepris jusqu'à présent ne permettent pas, encore aujourd'hui, de conférer aux EQT ainsi commandés une fiabilité assez élevée pour en faire un outil participant de façon sécuritaire à une procédure de freinage du train, que celui-ci soit un freinage normal ou d'urgence. En effet, les exigences de sécurités ferroviaires sont extrêmement drastiques, en particulier en Europe. En conséquence, les tentatives d'EQT actifs n'ont pas connues de succès industriel, tout au moins en Europe, puisqu'elles ne satisfont pas à ces exigences.

Il y a donc un besoin pour un équipement de queue de train qui soit extrêmement fiable et sûr pour participer effectivement à la sécurité ferroviaire et en particulier au freinage du train qu'il équipe.

L'invention a donc pour objet un équipement de queue de train apte à être fixé au dernier wagon d'un train, le train comportant une locomotive, une pluralité de wagons et une conduite générale pneumatique courant le long du train, l'extrémité côté locomotive de la conduite générale étant connectée pneumatiquement à un moyen de vidange apte à générer une variation de pression dans la conduite générale qui entraîne l'actionnement du système de freinage équipant chacun des wagons, l'équipement étant connecté, en fonctionnement, à la conduite générale pneumatique et comportant au moins une chaîne de contrôle comportant elle-même des moyens d'acquisition, des moyens de traitement et des moyens d'actionnement. Selon l'invention, les moyens d'acquisition mesurent uniquement la variation de pression dans la conduite générale, et les moyens de traitement et d'actionnement réalisent une vidange de la conduite générale dépendante de la variation de pression dans la conduite générale générée par la locomotive.

De préférence, ledit équipement est apte à réaliser plusieurs vidanges successives, au travers d'un ou de plusieurs orifices calibrés, le nombre et la durée desdites vidanges étant fonction de la variation de pression dans la conduite générale.

De préférence encore, l'équipement comporte une première chaîne de contrôle, totalement pneumatique, constituée de premiers moyens d'acquisition, de traitement et d'actionnement, et une seconde chaîne de contrôle, électropneumatique, constituée de seconds moyens d'acquisition, de traitement et d'actionnement, chacune des première et seconde chaînes de contrôle étant apte à réaliser une vidange de la conduite générale au niveau de l'équipement de queue de train, lesdites chaînes de contrôle étant connectées en parallèle à ladite conduite générale et ne comportant que des moyens indépendants de sorte que les chaînes pneumatique et électropneumatique ne présentent entre elles aucun mode commun de défaillance.

Dans une mode de réalisation particulier de l'invention, la chaîne de contrôle étant une première chaîne de contrôle totalement pneumatique constituée de premiers moyens d'acquisition, de traitement et d'actionnement, la première chaîne de contrôle comporte un piston apte à se déplacer en fonction de la différence de pression entre des chambres, la pression dans une première chambre étant une pression de référence, dite pression de fermeture, la pression dans une seconde chambre étant directement la pression de la conduite générale, ledit piston actionnant une vanne de vidange au travers d'un orifice calibré produisant des vidanges simples ou multiples de la conduite générale.

De préférence, ladite chaîne de contrôle étant une seconde chaîne de contrôle électropneumatique constituée de seconds moyens d'acquisition, de traitement et d'actionnement, la seconde chaîne de contrôle comporte au moins une vanne électropneumatique monostable apte à produire une vidange, et une unité de traitement apte à actionner ladite au moins une vanne électropneumatique produisant, au travers d'un orifice calibré, des vidanges simples ou multiples de la conduite générale en fonction d'un signal électrique de commande de freinage généré par lesdits seconds moyens d'acquisition.

De préférence encore, en plus du signal électrique de commande de freinage, ladite unité de traitement actionne ladite au moins une vanne électropneumatique en fonction de données appartenant à l'ensemble suivant :
- le fonctionnement de la première chaîne pneumatique tels que mesuré par des capteurs internes ;
- des paramètres initiaux stockés dans les moyens de mémorisation de ladite unité de traitement ;
- des mesures réalisées par des capteurs internes complémentaires et des boutons d'actionnement dont est muni ledit équipement ;
- des mesures réalisées par des capteurs externes audit équipement, ce dernier étant alors équipé de moyens de réceptions ; et,
- des séquences de test de l'appareil.

Dans un mode de réalisation particulier, ladite chaîne de contrôle étant une seconde chaîne de contrôle électropneumatique, l'équipement comprend des moyens de réveil commandés par une variation prédéfinie de la pression dans la conduite générale réveillant des circuits électriques de ladite seconde chaîne de contrôle.

De préférence, ladite chaîne de contrôle étant une seconde chaîne de contrôle électropneumatique, l'équipement comporte un convertisseur de puissance produisant une puissance électrique à partir de la vidange de la conduite générale générée par ledit équipement.

De préférence encore, l'équipement comporte un capteur vidéo permettant la visualisation d'une portion de voie située à l'arrière dudit dernier wagon.

L'invention a également pour objet un dispositif permettant de détecter l'intégrité d'un train, comportant un équipement de queue de train tel que celui précédemment décrit, ledit équipement étant fixé sur un train dont on cherche à déterminer l'intégrité, et en ce que le dispositif comporte en outre des moyens de corrélation apte à collecter des informations en queue dudit train générées par ledit équipement et à les comparer avec des informations en tête dudit train et à produire des informations utiles à la vérification de l'intégrité du train.

L'invention a également pour objet un procédé de vidange en queue de train d'une conduite générale courant le long d'un train, l'extrémité côté locomotive de la conduite générale étant connectée pneumatiquement à un moyen de vidange apte à générer une variation de pression dans la conduite générale qui entraîne l'actionnement du système de freinage équipant chacun des wagons du train. Le procédé selon l'invention comporte les étapes consistant à acquérir la seule mesure d'une variation de pression dans la conduite générale générée par la locomotive, à traiter la mesure et à actionner une vidange de la conduite générale en fonction de la variation de pression dans la conduite générale.

De préférence, une mesure de la variation de la pression dans la conduite générale suivie par une vidange calibrée générée par ladite mesure constituant un cycle de vidange, le procédé consiste en une succession de cycles de vidange tant que la variation de la pression dans la conduite générale évolue de manière à produire une mesure générant une vidange.

Avantageusement, par la présence de deux chaînes de contrôle de la vidange totalement indépendantes l'une de l'autre, assurant ainsi une redondance de l'actionnement de la vidange, l'EQT selon l'invention offre un très grand niveau de fiabilité et de sûreté lui permettant de répondre aux exigences les plus élevées.

Avantageusement, l'EQT selon l'invention est capable de répondre aux exigences de la sécurité et de l'exploitation ferroviaire en intégrant des technologies fiables aptes à réaliser les différentes actions nécessaires, et ceci de manière adaptée et de manière autonome, i.e. sans avoir recours à une source externe d'énergie électrique.

Avantageusement encore, l'équipement selon l'invention peut être utilisé en tant qu'aide à l'exploitation et à la productivité du système de transport ferroviaire. En effet, il permet d'augmenter la capacité de transport des trains et des lignes ainsi que d'automatiser certaines procédures avec les gains qui en résultent.

De plus, l'EQT selon l'invention apporte des améliorations des chaînes de contrôle pour minimiser le nombre et les effets d'éventuelles défaillances pouvant avoir un impact sur la vidange de la conduite générale. Plus particulièrement, l'invention propose des moyens d'alimentation électrique améliorés, une gestion des ressources électriques en fonction de la priorité relative de telle ou telle fonctionnalité, la mise à disposition d'informations sur l'état des composants de l'EQT, etc.

L'équipement de queue de train est fixé de manière amovible au dernier wagon d'un train, le train comportant au moins une locomotive et une pluralité de wagons, et connecté pneumatiquement à une conduite générale courant le long du train, l'extrémité côté locomotive de la conduite générale étant connectée pneumatiquement à un moyen de vidange apte à générer une commande pneumatique de freinage correspondant à une variation de pression dans la conduite générale entraînant l'actionnement d'un système de freinage équipant chacun des wagons. Il comporte une chaîne pneumatique complète apte à réguler la variation de pression dans la conduite générale en fonction de la commande pneumatique de freinage, la chaîne pneumatique comportant des moyens d'acquisition de la commande pneumatique de freinage, des moyens de traitement et des moyens d'actionnement aptes à réaliser au moins une vidange calibrée de la conduite générale au niveau de la queue du train.

De préférence, les moyens d'actionnement de la chaîne pneumatique sont aptes à réaliser plusieurs vidanges calibrées successives en fonction de la commande pneumatique de freinage.

De préférence encore, l'équipement comporte une chaîne électromécanique apte à réguler la variation de pression dans la conduite générale en fonction d'un ordre de freinage, la chaîne électromécanique comportant des moyens d'acquisition de l'ordre de freinage, des moyens de traitement et des moyens d'actionnement aptes à réaliser une vidange adaptée de la conduite générale au niveau de la queue du train, les chaînes électromécanique et pneumatique pouvant être utilisées indépendamment l'une de l'autre.

Dans un mode de réalisation de la chaîne pneumatique, celle-ci comporte un piston apte à se déplacer dans une chambre, la pression dans la chambre étant à une pression prédéterminée dite pression à fermeture en position de repos du piston, la pression au niveau de la queue de la conduite générale étant appliquée sur l'extrémité libre d'une tige du piston, et une première vanne calibrée actionnée par le déplacement du piston pour une vidange calibrée de la conduite générale.

Dans un mode de réalisation de la chaîne électromécaniques, celle-ci comporte une deuxième vanne électromécanique monostable et une unité de calcul apte à actionner de manière adaptée la deuxième vanne sur la base d'au moins un signal électrique de freinage appliquée en entrée de l'unité de calcul.

De préférence, un capteur de pression apte à transformer la variation de pression primaire dans la conduite générale considérée en tant qu'ordre de freinage en un signal électrique de freinage de mesure de pression appliqué en entrée de l'unité de calcul.

De préférence, en plus du signal électrique de freinage, l'unité de calcul actionne la deuxième vanne électromécanique en fonction de données parmi :
- des paramètres initiaux stockés dans des moyens de mémorisation de ladite unité de calcul ;
- des mesures réalisées par des capteurs internes dont est muni ledit équipement ; et,
- des mesures réalisées par des capteurs extérieurs audit équipement, ce dernier étant alors équipé de moyens de réceptions.

Dans un mode de réalisation, l'équipement comprend un moyen de réveil de la chaîne électromécanique consistant en un contact électrique actionnable lors d'une variation prédéfinie de la pression dans la conduite générale.

De préférence encore, l'équipement comporte plusieurs voies d'acquisition et de communication de données lui permettant d'échanger des données avec un niveau de sécurité élevé.

Dans un mode de réalisation, l'équipement comporte un moyen de production de puissance électrique disposé au niveau de l'extrémité côté queue de train de la conduite générale au voisinage des moyens d'actionnement des chaînes électromécaniques et pneumatiques, et apte à produire du courant électrique lors d'une variation de la pression dans ladite conduite générale générée par ledit équipement.

De préférence encore il comporte un accumulateur de puissance électrique et des moyens d'indications de l'état de charge dudit accumulateur.

De préférence il comporte un capteur vidéo permettant la visualisation d'une portion de voie située à l'arrière dudit dernier wagon.

Le procédé de freinage d'un train comportant un équipement de queue de train fixé au dernier wagon du train qui comporte au moins une locomotive et une pluralité de wagons, et connecté pneumatiquement à une conduite générale courant le long du train, l'extrémité côté locomotive de la conduite générale étant connectée pneumatiquement à un moyen de vidange apte à générer une commande pneumatique de freinage correspondant à une variation de pression dans la conduite générale, une variation de pression dans la conduite générale entraînant l'actionnement d'un système de freinage équipant chacun des wagons, consiste, le long d'une chaîne pneumatique de régulation de l'équipement, à acquérir la commande pneumatique de freinage, à la traiter et à actionner en conséquence des moyens de vidange calibrée de la conduite générale au niveau de la queue du train.

De préférence, l'étape d'actionnement est répétée pour atteindre une valeur cible de la pression dans la conduite générale.

De préférence, le procédé comporte, en redondances des étapes le long de la chaîne pneumatique, les étapes consistant, le long d'une chaîne électromécanique de régulation de l'équipement, à acquérir un ordre de freinage, à le traiter et à actionner des moyens de régulation de la pression dans la conduite générale en fonction de l'ordre de freinage.

De préférence, ledit ordre de freinage correspondant à une variation de pression dans la conduite générale, ladite étape de d'acquisition le long de la chaîné électromécanique consiste à générer un signal électrique de freinage au moyen d'un capteur de la pression dans la conduite générale.

De préférence, le procédé comporte une étape de vérification de l'intégrité du train consistant à corréler des informations pour générer un signal d'intégrité de ladite conduite générale.

L'invention sera mieux comprise et d'autres buts, détails, caractéristiques et avantages de celle-ci apparaîtront plus clairement au cours de la description donnée uniquement à titre illustratif et non limitatif en référence aux dessins annexés.
- La figure 1 est une vue générale d'un train dont le dernier wagon est équipé d'un EQT selon l'invention ;
- La figure 2 est un schéma-bloc représentant les différents modules constitutifs du mode de réalisation préféré de l'EQT selon l'invention ;
- La figure 3 représente schématiquement les deux chaînes de contrôle de la vidange de l'EQT de la figure 2 ;
- La figure 4 représente, de façon schématique, un moyen permettant le réveil des composants électriques de l'EQT selon l'invention ;

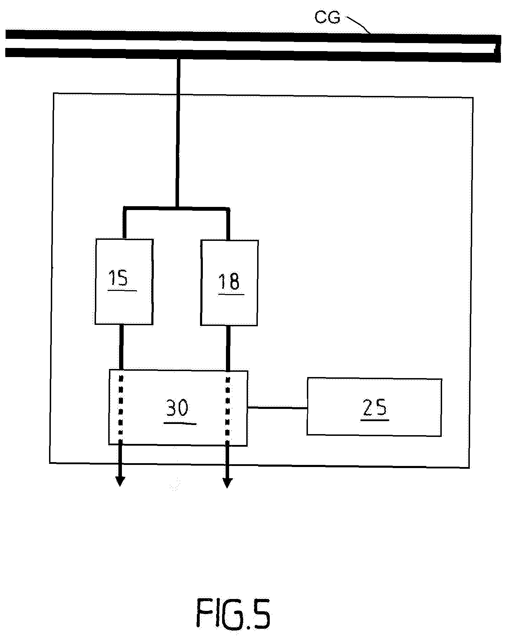

- La figure 5 représente schématiquement un moyen permettant d'alimenter en énergie électrique les circuits de l'EQT de la figure2.

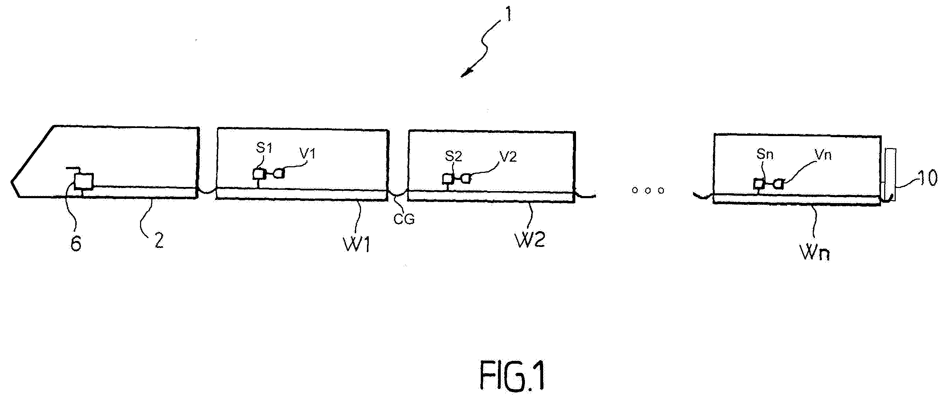

De manière connue, le système de freinage d'un train fonctionne de la manière suivante. Sur la figure 1, on a représenté schématiquement un train 1. Une locomotive 2 située en tête du train 1 est apte à propulser N wagons W₁ à Wₙ disposés les uns derrières les autres. Chacun des wagons Wᵢ comporte un actionneur Sᵢ apte à déclencher le système de freinage dudit wagon. L'actionneur du système de freinage est déclenché pneumatiquement. C'est la raison pour laquelle chacun des actionneurs de freinage Sᵢ est connecté à une conduite générale CG courant le long du train 1 entre la locomotive 2 et le wagon de queue Wₙ. La pression de l'air dans la conduite générale CG est à une valeur par défaut de l'ordre de 5 bars. Pour freiner, le conducteur du train actionne un moyen de vidange 6 disposé à l'extrémité côté locomotive de la conduite générale CG. En actionnant le moyen de vidange 6, une variation de pression primaire est générée au niveau de la tête de train. Lorsque l'actionneur de freinage Sᵢ du wagon Wᵢ détecte une dépression dans la conduite générale CG, non seulement il actionne le système de freinage du wagon qu'il équipe, mais encore il actionne une vanne Vᵢ de vidange rapide de la conduite générale CG conduisant à une chute de pression rapide de l'ordre de 0,5 bar. Ainsi, la variation de pression primaire cause de l'actionnement de l'actionneur Si, est amplifiée et est propagée au wagon suivant Sᵢ₊₁. De proche en proche, la dépression initiale atteint le wagon de queue Wₙ. Ce mode de fonctionnement classique des trains actuellement en circulation est dénommé "fonction accélératrice" de la conduite générale CG.

Selon l'invention, l'arrière du wagon de queue Wₙ est muni d'un EQT 10, de préférence amovible, mais qui pourrait être fixé définitivement ou intégré dans le wagon lui-même. L'EQT 10 présente différentes fonctionnalités permettant d'en faire un outil actif de la sécurité ferroviaire. Il est à noter que l'EQT 10 n'est pas relié à une source de puissance électrique, et qu'en cela il est autonome.

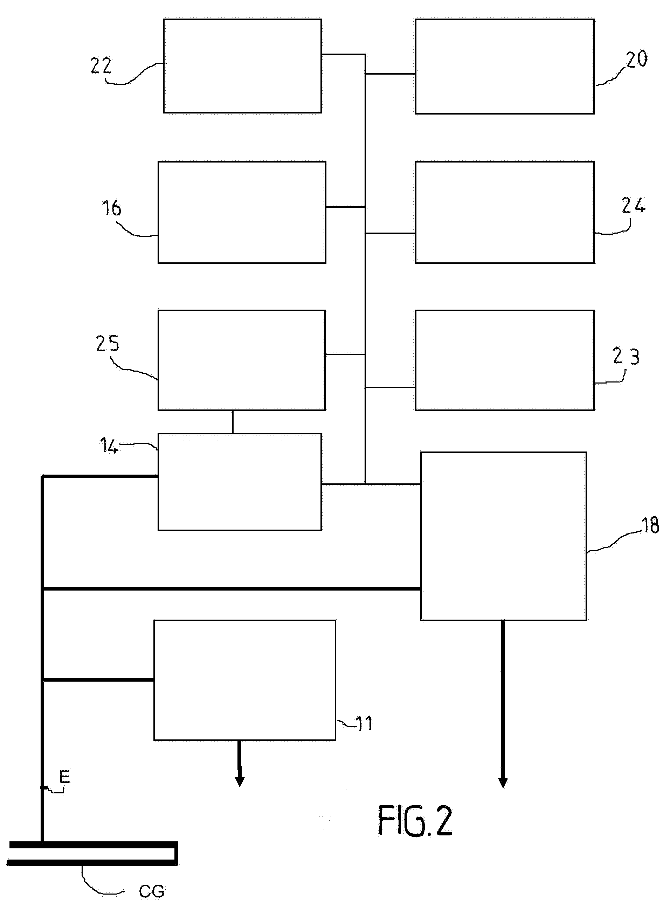

Sur la figure 2, on a représenté schématiquement sous forme de blocs les éléments constitutifs de l'EQT 10.

Pour remplir une fonction d'assistance au freinage, l'EQT 10 est connecté pneumatiquement à l'extrémité côté queue de train de la conduite générale CG. Cette connexion est réalisée manuellement en accouplant des moyens de connexion de l'EQT à des moyens de connexion conjugués de l'extrémité de la conduite générale CG.

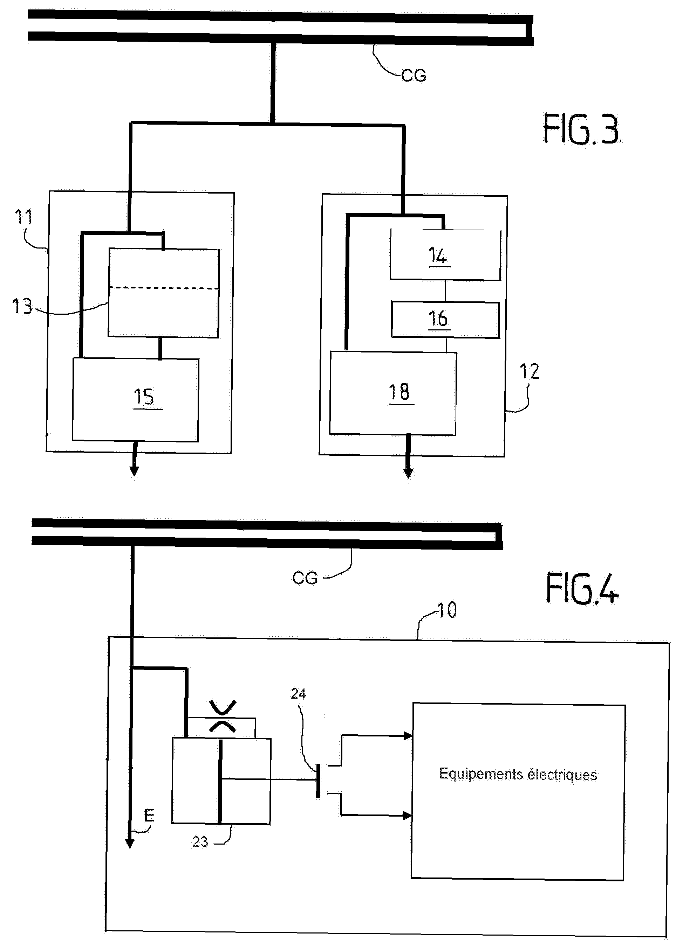

En se référant à la figure 3, l'EQT 10 comporte une première chaîne de contrôle 11 entièrement pneumatique. La première chaîne de contrôle 11 comporte des premiers moyens d'acquisition, de traitement et d'actionnement. Dans le mode de réalisation actuellement envisagé, un ensemble pneumatiques 13 est apte à détecter une variation de pression dans la conduite CG. Plus précisément, l'ensemble pneumatique comporte un piston apte à se déplacer en fonction de la différence de pression entre des chambres, la pression dans une première chambre étant une pression de référence, dite pression de fermeture, la pression dans une seconde chambre étant directement la pression de la conduite générale. Le piston actionne une vanne 15 montée sur la conduite CG. La vanne 15 constitue un premier dispositif d'échappement par mise en communication fluidique de la conduite générale avec l'atmosphère. Lors de la mesure d'une variation de pression dans la conduite générale, l'ouverture de la vanne 15 crée un échappement permettant la vidange de la conduite générale CG. La vidange se fait au travers d'un ou de plusieurs orifices calibrés.

Cette vidange est limitée dans le temps. Ce processus peut être réalisé au moyen d'un orifice calibré reliant la première chambre à la seconde chambre de l'ensemble 13. Lors de la vidange, la pression dans la seconde chambre diminue fortement. L'orifice calibré permet un rééquilibrage progressif, ayant une constate de temps prédéterminée, entre la pression dans la première chambre et la pression dans la seconde chambre.

De plus, dès que l'équilibre est atteint, le piston revient dans sa position par défaut et ferme la vanne 15, terminant alors la vidange. Un rééquilibrage rapide de la pression dans la conduite générale a alors lieu. A cet instant du cycle, la première chambre est mise en communication avec la conduite générale de sorte que la pression atteinte dans la conduite générale est utilisée pour établir la pression dans la première chambre. Celle-ci est alors fermée, sa pression servant de pression de référence. Si par la suite la pression dans la conduite générale continue de diminuer, la différence des pressions entre les première et seconde chambres engendrera une autre vidange. Plusieurs vidanges successives peuvent ainsi être réalisées en fonction de la variation temporelle de la pression dans la conduite générale, la pression dans la conduite générale étant mesurée entre deux vidanges successives par comparaison avec la pression de référence. Le cycle de vidange est répété autant de fois que nécessaire pour satisfaire à l'évolution de la variation de la pression dans la conduite générale initiée par le mécanicien du train au niveau de la locomotive.

L'actionnement pneumatique de la vidange de la conduite générale sans dépendance par rapport à un signal électrique de commande du freinage permet d'utiliser l'EQT 10 en tant que dispositif d'aide au freinage. En effet, avec cette première chaîne de contrôle de la vidange de la conduite générale composée d'éléments mécaniques et pneumatiques, l'EQT est au même niveau de sécurité que les organes de freinage disposés sur les wagons. Ainsi, ce mode de fonctionnement sûr rend l'EQT selon l'invention utilisable dans une procédure de freinage.

En variante, l'EQT pourrait comporter plusieurs premières chaînes de contrôle de la vidange qui différeraient les unes des autres par le calibre des orifices respectifs de chaque chaîne, plusieurs voies parallèles assurant un niveau de disponibilité et de sécurité encore plus élevé.

Outre cette première chaîne de contrôle de vidange pneumatique, l'EQT 10 peut comporter une seconde chaîne de contrôle de la vidange qui est électropneumatique. Une telle seconde chaîne de contrôle est repérée par le chiffre 12 sur les figures décrivant le mode de réalisation actuellement préféré de l'invention. Cette seconde chaîne électropneumatique possède des fonctions complémentaires d'ajustement des paramètres de la vidange en fonction d'informations plus fines. Pour cela cette seconde chaîne électropneumatique comporte des composants électroniques et électromécaniques consommant de la puissance électrique.

En se référant à la figure 3, la seconde chaîne électropneumatique 12 comporte, en tant que second moyen d'acquisition de la mesure de la variation de pression dans la conduite générale, un capteur de pression 14 connecté à la conduite CG. En fonctionnement, le capteur 14 produit un signal électrique qui est une fonction de la pression instantanée dans la conduite générale.

La seconde chaîne électropneumatique 12 de l'EQT 10 comporte également une unité de traitement 16, en tant que second s moyens de traitement, apte à traiter des données. Par exemple, l'unité de traitement 16 prend, en entrée, le signal électrique émis par le capteur 14 et produit, en sortie, un signal électrique d'actionnement. Le signal électrique d'actionnement est émis en direction de seconds moyens d'actionnement de la vidange consistant en une seconde vanne 18 du type électromécanique monostable à une ou deux bobines.

La seconde vanne 18, lorsqu'elle est actionnée, passe d'une position fermée à une première position ouverte ou une deuxième position ouverte, le débit d'air circulant dans la seconde vanne 18 étant ajusté en fonction du signal électrique d'actionnement et donc de la mesure de la pression dans la conduite générale.

Dans chacune des positions ouvertes, la conduite générale CG est connectée à l'atmosphère au travers d'un orifice calibré, créant ainsi un échappement permettant une vidange de la conduite générale CG. Cette vidange est réglable en modifiant la durée d'ouverture de la vanne 18 ou en réalisant une succession de vidanges élémentaires.

Les conditions d'utilisation de cette seconde chaîne de contrôle électropneumatique 12 de l'EQT 10 pour une vidange vont maintenant être décrites.

Une variation de la pression est générée en amont de la conduite générale CG, et se propage le long de celle-ci vers la queue du train. Il s'agit d'abord d'une dépression rapide d'environ un demi bar (effet accélérateur), puis ensuite, en fonction de la nature du freinage demandé par le mécanicien de la locomotive, par une variation plus lente de la pression. Si la première dépression se fait en quelques secondes (typiquement trois secondes), la seconde partie de la variation de la pression dans la conduite générale possède une constante de temps de plusieurs dizaines de secondes. Si il s'agit d'un freinage d'urgence, la pression dans la conduite générale continue de diminuer rapidement. En revanche, s'il s'agit d'un freinage de service, par exemple pour un simple ralentissement, la pression reste constante mais à un niveau réduit pour un actionnement des systèmes de freinage des wagons. Si le mécanicien se ravise et ne souhaite plus freiner le train, la pression dans la conduite générale remonte progressivement.

Selon l'invention, la première chaîne pneumatique 11 de l'EQT 10 permet la détection de la dépression rapide de la pression dans la conduite générale CG et l'actionnement immédiat de la vanne 15 provoquant une vidange partielle de la conduite générale CG au moins au niveau du wagon de queue Wₙ. Ainsi, très rapidement, le système de freinage du wagon de queue Wₙ est actif, puis celui du wagon précédent Wₙ₋₁, etc. Le train freine au niveau des wagons de tête et des wagons de queue. On notera que la vidange est calibrée pour que la force de freinage générée par le système de frein du dernier wagon soit à un niveau minimisant les efforts dans le train tout en augmentant la réactivité du frein.

Cette première chaîne pneumatique 11 possède également la capacité d'entrer en action autant de fois que nécessaire pour remplir l'objectif de freinage requis, et ceci en fonction de l'évolution temporelle de la pression dans la conduite générale.

La deuxième chaîne électropneumatique 12 génère une action dans plusieurs cas. Par exemple elle peut intervenir en complément de l'actionnement de la première chaîne pneumatique 11 pour parfaire les stratégies de vidange en fonction de l'évolution temporelle de la pression dans la conduite générale CG.

La deuxième chaîne électropneumatique 12 peut également générer une action en cas de défaillance de la première chaîne pneumatique 11, cette action s'effectuant alors avec un retard infime par rapport au déroulement normal de la séquence de freinage.

L'unité de traitement ou de calcul 16 est ainsi préprogrammée pour engendrer une action prédéfinie par rapport au signal de mesure de pression délivré par le capteur 14. Elle peut également générer un signal d'actionnement qui dépend d'autres informations que la simple mesure de pression dans la conduite générale CG. Ces autres informations ou données peuvent être des informations instantanées telles que la vitesse ou l'accélération du wagon de queue Wₙ ou des informations entrées dans l'unité de calcul 16 par un opérateur lors de l'accrochage des wagons (nombre des wagons, poids du chargement, etc.)

Les éventuels signaux électriques additionnels reçus par l'unité de calcul 16 peuvent provenir de capteurs internes 20 embarqués dans l'EQT. Il peut s'agir par exemple d'un capteur d'accélération apte à mesurer l'accélération instantanée du dernier wagon Wₙ. L'unité de calcul 16 permet alors un pré-traitement de ce signal électrique d'accélération pour déterminer la vitesse instantanée du dernier wagon Wₙ.

En variante, des signaux de mesure peuvent être obtenus à partir de capteurs externes. Dans ce cas l'EQT 10 est muni d'un récepteur apte à capter des ondes électromagnétiques provenant de capteurs disposés dans l'environnement. Par exemple, une information sur la vitesse du train obtenue au moyen d'un capteur doppler placé le long de la voie, ou une information de position obtenue au moyen d'un dispositif GPS peuvent être transmises par radio à l'unité de calcul 16.

La deuxième chaîne de contrôle de la vidange électropneumatique 12 a la capacité d'ajuster les paramètres de la vidange en prenant en compte plus d'informations que ne le permet la première chaîne pneumatique. Si cette deuxième chaîne ne fonctionne pas, par exemple par manque de puissance électrique pour la faire fonctionner, elle laisse la main à la seule première chaîne de contrôle pneumatique 11 possédant des fonctions de régulation propres aptes à garder le train dans son périmètre de sécurité. Une panne unique de quelque nature que ce soit ne risque donc pas de mettre le train dans une situation dangereuse car éventuellement la capacité d'échappement d'une des chaînes de contrôle sera affectée par cette défaillance, mais l'autre chaîne, complètement indépendante de la chaîne défaillante, assurera un échappement totalement fonctionnel.

On notera que les deux chaînes de contrôle possèdent des temps de mise en action très courts conduisant à un freinage efficace permettant de réduire les efforts longitudinaux de compression le long du train et/ou d'améliorer la dynamique du comportement du train.

On notera également que les modes de fonctionnement de l'EQT qui viennent d'être décrits, à l'exception de ceux utilisant des capteurs externes dans la seconde chaîne, sont uniquement fondés sur une mesure de la pression dans la conduite générale. Ceci est particulièrement avantageux en ce qui concerne la fiabilité et par conséquent la sécurité du train équipé de l'EQT selon l'invention. Ceci présente l'avantage de permettre une vidange en queue de train pour réaliser un freinage d'urgence dans le cas, par exemple, de la rupture de la conduite générale ou en cas de survenue de défaillance de partie non mécaniques du système de freinage général du train.

Bien que seule la seconde chaîne fasse appel à l'énergie électrique, son rôle est important et justifie que la gestion de l'énergie électrique de l'EQT selon l'invention soit améliorée.

Comme représenté sur la figure 4, l'EQT comporte un contact 24 piloté par un dispositif 23 relié à la conduite générale CG. Ce contact se ferme sur certaines conditions de variations de pression dans la conduite générale CG. Il excite les circuits électriques de l'EQT pour une durée courte typiquement entre 1 et 10 secondes. En variante, ou de manière additionnelle, un dispositif à consommation infinitésimale peut exciter les circuits électriques de l'EQT sur d'autres critères que la simple variation de pression dans la conduite générale. Ce peut être par exemple en réponse à un signal reçu par un des capteurs dont est équipé l'EQT. Dès la fonction remplie, le circuit s'ouvre et la consommation retombe à zéro.

Ainsi, les composants électriques de l'EQT peuvent n'être allumés que lors d'un événement de freinage et les fonctions que ces composants réalisent ne sont disponibles que dans un court intervalle de temps après l'évènement de freinage considéré. Le reste du temps ces composants sont éteints et ne consomment aucune énergie électrique. La détection de cet événement de freinage se fait sans consommation électrique.

Le réveil des composants électriques peut s'accompagner de l'émission d'un message pour signifier un diagnostic de bon fonctionnement.

L'énergie électrique nécessaire au fonctionnement de l'EQT peut également provenir de l'énergie issue des actions de l'EQT lui-même et plus particulièrement de la vidange de la conduite générale CG. Pour cela, l'EQT peut avantageusement comporter un convertisseur de puissance produisant une puissance électrique à partir de la vidange de la conduite générale générée par l'équipement. Le convertisseur comporte une turbine 30, ou l'équivalent, placée sur la conduite générale en aval des vannes 15 et 18. La turbine est mise en mouvement par le flux important d'air qui la traverse lors d'une vidange de la conduite générale CG générée au moyen de l'EQT. L'énergie électrique produite par la rotation de la turbine est soit immédiatement consommée par les composants électriques de l'EQT, soit stockée dans un accumulateur 25, ou l'équivalent, pour une utilisation ultérieure. Ainsi, pour recharger l'accumulateur 25, il n'est pas nécessaire de consommer de manière supplémentaire l'air sous pression contenu dans la conduite générale.

Avantageusement, l'EQT selon l'invention est muni d'un dispositif de contrôle de l'état de charge. Cette information est nécessaire lorsque le responsable de cette tâche dispose l'EQT sur le dernier wagon d'un train pour assurer une mission. Cette information peut être transmise à l'extérieur de l'EQT pour connaître l'état instantané de charge de l'accumulateur 25. Ce dispositif permet également, en cas de puissance électrique insuffisante, d'informer l'unité de traitement 16 pour que celle-ci n'assure que les fonctions essentielles pouvant être réalisées avec le peu d'énergie électrique disponible.

L'EQT est avantageusement muni de moyens de détection et d'alarme de défaillance. L'intégrité du train ou la rupture du convoie pourrait par exemple être déterminée en comparant la position du dernier wagon avec celle de la locomotive et les variations de celle-ci.

La mesure de la pression dans la conduite générale au moyen du capteur 13 constitue une information qu'il est peut être intéressant de suivre et de surveiller pour des raisons de sécurité ainsi que de confort de conduite.

Il est particulièrement avantageux que ces fonctions de détection et d'alarme soient disponibles lors de la formation du convoie ou au démarrage du train pour déterminer si l'EQT a été correctement branché sur la conduite générale ou même si le train dispose d'un tel EQT. Ainsi, une procédure utilisant l'EQT selon, l'invention pourrait être avantageusement intégrée dans le test initial des freins. L'ensemble de ces fonctions permet de réduire les erreurs humaines.

Si l'EQT n'est pas muni de moyens de communication radio avec l'extérieur, qu'il s'agisse du sol ou de la locomotive, d'autres moyens de communication peuvent être envisagés. Par exemple un Bus de communication électrique pourrait courir le long du train, ce qui nécessiterait une opération manuelle de connexion des différentes sections dudit Bus lors de la formation du train. En variante, des moyens de communication pourraient mettre à profit la présence de la conduite générale en utilisant des signaux pneumatiques générés et se propageant le long de la conduite générale entre un émetteur et un récepteur acoustique, les signaux ayant une fréquence distincte de la fréquence de l'ordre de freinage pneumatique.

L'EQT selon l'invention est équipé d'un module fanal de queue de train 23 comportant un moyen de génération de signaux lumineux et de moyens de surveillance de son état à distance.

Pour encore améliorer la sécurité, l'EQT selon l'invention est avantageusement muni d'un module d'acquisition d'image 24 comportant une caméra du type CCD dont les images sont communiquées à la locomotive. Ceci offre la possibilité au mécanicien de voire la voie à l'arrière du train.

En prenant en compte systématiquement les multiples contraintes de l'environnement ferroviaire, un EQT peut remplir un certain nombre de fonctions additionnelles. L'implémentation de ces fonctions augmente significativement la sécurité ferroviaire et par conséquent la productivité ferroviaire.

Bien que l'invention ait été décrite en référence à des modes de réalisation particuliers, elle n'est nullement limitée à ces modes de réalisation. Elle comprend tous les équivalents techniques des moyens décrits ainsi que leurs combinaisons qui entrent dans le cadre de l'invention.

## Revendications

1. Equipement de queue de train (10) apte à être fixé au dernier wagon d'un train, ledit train comportant une locomotive, une pluralité de wagons et une conduite générale (CG) pneumatique courant le long dudit train, l'extrémité côté locomotive de ladite conduite générale étant connectée pneumatiquement à un moyen de vidange (6) apte à générer une variation de pression dans ladite conduite générale qui entraîne l'actionnement du système de freinage équipant chacun desdits wagons, ledit équipement étant connecté, en fonctionnement, à la conduite générale pneumatique et comportant au moins une chaîne de contrôle (11) comportant elle-même des moyens d'acquisition, (13) des moyens de traitement et des moyens d'actionnement, (15) **caractérisé en ce que** les moyens d'acquisition mesurent uniquement ladite variation de pression dans la conduite générale, et **en ce que** les moyens de traitement et d'actionnement réalisent une vidange de ladite conduite générale dépendante de la variation de pression dans ladite conduite générale générée par la locomotive.

2. Equipement selon revendication 1, **caractérisé en ce que** ledit équipement est apte à réaliser plusieurs vidanges successives, au travers d'un ou de plusieurs orifices calibrés, le nombre et la durée desdites vidanges étant fonction de la variation de pression dans la conduite générale.

3. Equipement selon l'une des revendications 1 et 2, **caractérisé en ce qu'**il comporte une première chaîne de contrôle (11), totalement pneumatique, constituée de premiers moyens d'acquisition, de traitement et d'actionnement, et **en ce que** ledit l'équipement comporte une seconde chaîne de contrôle (12), électropneumatique, constituée de seconds moyens d'acquisition, de traitement et d'actionnement, chacune des première et seconde chaînes de contrôle étant apte à réaliser une vidange de ladite conduite générale au niveau de l'équipement de queue de train, lesdites chaînes de contrôle étant connectées en parallèle à ladite conduite générale et ne comportant que des moyens indépendants de sorte que lesdites chaînes pneumatique et électropneumatique ne présentent entre elles aucun mode commun de défaillance.

4. Equipement selon l'une quelconque des revendications 1 à 3, **caractérisé en ce que**, ladite chaîne de contrôle étant une première chaîne de contrôle totalement pneumatique constituée de premiers moyens d'acquisition, de traitement et d'actionnement, ladite première chaîne de contrôle comporte un piston apte à se déplacer en fonction de la différence de pression entre des chambres, la pression dans une première chambre étant une pression de référence, dite pression de fermeture, la pression dans une seconde chambre étant directement la pression de la conduite générale, ledit piston actionnant une vanne de vidange au travers d'un orifice calibré produisant des vidanges simples ou multiples de la conduite générale.

5. Equipement selon l'une quelconque des revendications 1 à 4, **caractérisé en ce que**, ladite chaîne de contrôle étant une seconde chaîne de contrôle électropneumatique constituée de seconds moyens d'acquisition, de traitement et d'actionnement, ladite seconde chaîne de contrôle comporte au moins une vanne électropneumatique monostable apte à produire une vidange, et une unité de traitement apte à actionner ladite au moins une vanne électropneumatique produisant, au travers d'un orifice calibré, des vidanges simples ou multiples de la conduite générale en fonction d'un signal électrique de commande de freinage généré par lesdits seconds moyens d'acquisition.

6. Equipement selon la revendication 5, **caractérisé en ce que**, en plus du signal électrique de commande de freinage, ladite unité de traitement actionne ladite au moins une vanne électropneumatique en fonction de données appartenant à l'ensemble suivant :
- le fonctionnement de la première chaîne pneumatique tels que mesuré par des capteurs internes ;
- des paramètres initiaux stockés dans les moyens de mémorisation de ladite unité de traitement ;
- des mesures réalisées par des capteurs internes complémentaires et des boutons d'actionnement dont est muni ledit équipement ;
- des mesures réalisées par des capteurs externes audit équipement, ce dernier étant alors équipé de moyens de réceptions ; et,
- des séquences de test de l'appareil.

7. Equipement selon l'une quelconques des revendications 1 à 6, **caractérisé en ce que**, ladite chaîne de contrôle étant une seconde chaîne de contrôle électropneumatique, ledit équipement comprend des moyens de réveil commandés par une variation prédéfinie de la pression dans la conduite générale réveillant des circuits électriques de ladite seconde chaîne de contrôle.

8. Equipement selon l'une des revendications 1 à 7, **caractérisé en ce que**, ladite chaîne de contrôle étant une seconde chaîne de contrôle électropneumatique, ledit équipement comporte un convertisseur de puissance produisant une puissance électrique à partir de la vidange de la conduite générale générée par ledit équipement.

9. Equipement selon l'une des revendications 1 à 8, **caractérisé en ce qu'**il comporte un capteur vidéo permettant la visualisation d'une portion de voie située à l'arrière dudit dernier wagon.

10. Dispositif permettant de détecter l'intégrité d'un train, **caractérisé en ce qu'**il comporte un équipement de queue de train selon l'une quelconque des revendications 1 à 9, ledit équipement étant fixé sur un train dont on cherche à déterminer l'intégrité, et **en ce que** le dispositif comporte en outre des moyens de corrélation apte à collecter des informations en queue dudit train générés par ledit équipement et à les comparer avec des informations en tête dudit train et à produire des informations utiles à la vérification de l'intégrité du train.

11. Procédé de vidange en queue de train d'une conduite générale courant le long d'un train, l'extrémité côté locomotive de ladite conduite générale étant connectée pneumatiquement à un moyen de vidange apte à générer une variation de pression dans ladite conduite générale qui entraîne l'actionnement du système de freinage équipant chacun des wagons dudit train, **caractérisé en ce que** ledit procédé comporte les étapes consistant à acquérir la seule mesure d'une variation de pression dans la conduite générale générée par la locomotive, à traiter ladite mesure et à actionner une vidange de ladite conduite générale en fonction de la variation de pression dans ladite conduite générale.

12. Procédé selon la revendication 11, **caractérisé en ce que**, une mesure de la variation de la pression dans la conduite générale suivie par une vidange calibrée générée par ladite mesure constituant un cycle de vidange, ledit procédé consiste en une succession de cycles de vidange tant que la variation de la pression dans la conduite générale évolue de manière à produire une mesure générant une vidange.

## Patentansprüche

1. Ausrüstung (10) für ein Zugende, dazu geeignet, am letzten Waggon eines Zuges befestigt zu werden, wobei der Zug eine Lokomotive, eine Mehrzahl von Waggons und eine pneumatische Hauptbremsleitung (CG) aufweist, die entlang des Zuges verläuft, wobei das an der Lokomotive gelegene Ende der pneumatischen Hauptbremsleitung pneumatisch an ein Entleerungsmittel (6) angeschlossen ist, das dazu geeignet ist, eine Druckänderung in der pneumatischen Hauptbremsleitung zu erzeugen, die eine Betätigung des Bremssystems jedes der besagten Waggons bewirkt, wobei die Ausrüstung im Betrieb an die pneumatische Hauptbremsleitung angeschlossen ist und wenigstens eine Steuerungskette (11) aufweist, die selbst Erfassungsmittel (13), Verarbeitungsmittel und Betätigungsmittel (15) aufweist,
**dadurch gekennzeichnet, dass** die Erfassungsmittel nur die gesagte Druckänderung in der pneumatischen Hauptbremsleitung messen und dass die Verarbeitungsmittel und die Betätigungsmittel in Abhängigkeit von der von der Lokomotive erzeugten Druckänderung eine Entleerung der pneumatischen Hauptbremsleitung bewirken.

2. Ausrüstung gemäss Anspruch 1, **dadurch gekennzeichnet, dass** die Ausrüstung dazu geeignet ist, mehrere aufeinanderfolgende Entleerungen durch eine oder mehrere kalibrierte Öffnungen durchzuführen, wobei die Zahl und die Dauer der Entleerungen von der Druckänderung in der pneumatischen Hauptbremsleitung abhängen.

3. Ausrüstung gemäss einem der Ansprüche 1 und 2, **dadurch gekennzeichnet, dass** sie eine vollständig pneumatische erste Steuerungskette (11) aufweist, die aus ersten Mitteln zum Erfassen, zum Verarbeiten und zum Betätigen gebildet ist, und dass die Ausrüstung eine elektropneumatische zweite Steuerungskette (12) aufweist, die aus zweiten Mitteln zum Erfassen, zum Verarbeiten und zum Betätigen gebildet ist, wobei jede der ersten und zweiten Steuerungskette dazu geeignet ist, eine Entleerung der pneumatischen Hauptbremsleitung an der Ausrüstung des Zugendes durchzuführen, wobei die Steuerungsketten mit der pneumatischen Hauptbremsleitung parallel verbunden sind und nur unabhängige Mittel aufweisen, so dass die pneumatische und die elektropneumatische Steuerungskette unter sich keinen gemeinsamen Ausfallmodus aufweisen.

4. Ausrüstung gemäss einem der Ansprüche 1 bis 3, **dadurch gekennzeichnet, dass**, wenn die Steuerungskette eine erste, vollständig pneumatische, aus ersten Mitteln zum Erfassen, zum Verarbeiten und zum Betätigen gebildete Steuerungskette ist, die erste Steuerungskette einen Kolben aufweiset, der dazu geeignet ist, sich in Abhängigkeit von der Druckdifferenz zwischen Kammern zu bewegen, wobei der Druck in einer ersten Kammer ein als Schliessdruck bezeichneter Referenzdruck ist, der Druck in einer zweiten Kammer direkt der Druck der pneumatischen Hauptbremsleitung ist, wobei der Kolben ein Ventil zum Entleeren durch eine kalibrierte Öffnung betätigt, das einfache oder mehrfache Entleerungen der pneumatischen Hauptbremsleitung durchführt.

5. Ausrüstung gemäss einem der Ansprüche 1 bis 4, dadurch gekennzeichet, dass, wenn die Steuerungskette eine zweite, elektropneumatische, aus zweiten Mitteln zum Erfassen, zum Verarbeiten und zum Betätigen gebildete Steuerungskette ist, die zweite Steuerungskette wenigstens ein elektropneumatisches monostabiles Ventil, das dazu geeignet ist, eine Entleerung durchzuführen, und eine Verarbeitungseinheit, die dazu geeignet ist, das wenigstens eine elektropneumatische Ventil zu betätigen, aufweist, wobei einfache oder mehrfache Entleerungen der pneumatischen Hauptbremsleitung durch eine kalibrierte Öffnung in Abhängigkeit eines elektrischen Bremssteuersignals durchgeführt werden, das durch die zweiten Erfassungsmittel erzeugt worden ist.

6. Ausrüstung gemäss Anspruch 5, **dadurch gekennzeichnet, dass** die Verarbeitungseinheit zusätzlich zum elektrischen Bremssteuersignal das wenigstens eine elektropneumatische Ventil in Abhängigkeit von Daten betätigt, die zu folgender Gesamtheit gehören:
- das Funktionieren der pneumatischen ersten Steuerungskette, wie von den internen Sensoren gemessen;
- in den Speichermitteln der Verarbeitungseinheit gespeicherte Anfangsparameter;
- von komplementären internen Sensoren und mit Betätigungsknöpfen, mit denen die Ausrüstung bestückt ist, durchgeführte Messungen;
- von in Bezug auf die Ausrüstung externen Sensoren durchgeführte Messungen, wobei die Ausrüstung mit Empfangsmitteln verstehen ist; und
- Testsequenzen des Apparats.

7. Ausrüstung gemäss einem der Ansprüche 1 bis 6, **dadurch gekennzeichnet, dass**, wenn die Steuerungskette eine elektropneumatische zweite Steuerungskette ist, die Ausrüstung Weckmittel aufweist, die durch eine vorbestimmte Änderung des Drucks in der pneumatischen Hauptbremsleitung gesteuert werden, die elektrische Schaltkreise der besagten zweiten Steuerungskette wecken.

8. Ausrüstung gemäss einem der Ansprüche 1 bis 7, **dadurch gekennzeichnet, dass**, wenn die Steuerungskette eine elektropneumatische zweite Steuerungskette ist, die Ausrüstung einen Energiewandler aufweist, der eine elektrische Energie aus der durch die Ausrüstung erzeugte Entleerung der pneumatischen Hauptbremsleitung erzeugt.

9. Ausrüstung gemäss einem der Ansprüche 1 bis 8, **dadurch gekennzeichnet, dass** sie einen Videosensor aufweist, der ermöglicht, einen Abschnitt der hinter dem letzten Waggon liegenden Gleise anzuschauen.

10. Vorrichtung, die ermöglicht, das Vollständigsein eines Zuges zu erfassen, **dadurch gekennzeichnet, dass** sie eine Ausrüstung für ein Zugende gemäss einem der Ansprüche 1 bis 9 aufweist, wobei die Ausrüstung an einem Zug angebracht ist, dessen Vollständigkeit man zu erfassen sucht, und dass die Vorrichtung ausserdem Korrelationsmittel aufweist, die dazu geeignet sind, Informationen, die durch die Ausrüstung erzeugt worden sind, am Ende des Zuges zu sammeln und diese mit Informationen an der Spitze des Zuges zu vergleichen und Informationen zu erzeugen, die für die Überprüfung der Vollständigkeit des Zuges dienlich sind.

11. Verfahren zum Entleeren einer pneumatischen, entlang eines Zuges verlaufenden Hauptbremsleitung am Ende des Zuges, wobei das an der Lokomotive gelegene Ende der pneumatischen Hauptbremsleitung pneumatisch an ein Entleerungsmittel angeschlossen ist, das dazu geeignet ist, eine Druckänderung in der pneumatischen Hauptbremsleitung zu erzeugen, die eine Betätigung des Bremssystems jedes der besagten Waggons bewirkt, **dadurch gekennzeichnet, dass** das Verfahren die Schritte beinhaltet, die darin bestehen, die Messung allein einer durch die Lokomotive erzeugten Druckänderung in der Hauptbremsleitung zu erfassen, die Messung zu verarbeiten und eine Entleerung der pneumatischen Hauptbremsleitung in Abhängigkeit von der Druckänderung in der pneumatischen Hauptbremsleitung zu bewirken.

12. Ausrüstung gemäss Anspruch 11, **dadurch gekennzeichnet, dass**, wenn eine Messung der Änderung des Druckes in der Hauptbremsleitung, gefolgt von einer durch die Messung erzeugten kalibrierten Entleerung, einen Entleerungszyklus darstellt, das Verfahren in einer Folge von Entleerungszyklen besteht, solange die Druckänderung in der Hauptbremsleitung so verläuft, dass eine Messung eine Entleerung erzeugt.

## Claims

1. An end-of-train unit (10) adapted to be fixed to the last wagon of a train, said train including a locomotive, a plurality of wagons and a pneumatic trainline (CG) extending along said train, the locomotive-side end of said trainline being pneumatically connected to a draining means (6) adapted to generate in said trainline a variation of pressure that leads to the actuation of the brake system equipping each of said wagons, said unit being connected, in operation, to the pneumatic trainline and including at least one control chain (11) itself including acquisition means (13), processing means and actuation means (15),
**characterized in that** the acquisition means only measure said variation of pressure in the trainline, and **in that** the processing and actuation means perform a draining of said trainline depending on the variation of pressure in said trainline generated by the locomotive.

2. The unit according to claim 1, **characterized in that** said equipment is adapted to perform several successive draining operations, through one or several calibrated holes, the number and duration of said draining operations being function of the variation of pressure in the trainline.

3. The unit according to one of claims 1 and 2, **characterized in that** it includes a first, fully pneumatic, control chain (11), consisted of first acquisition, processing and actuation means, and **in that** said unit includes a second, electropneumatic, control chain (12), consisted of second acquisition, processing and actuation means, each of the first and second control chains being adapted to perform a draining of said trainline at the end-of-train unit, said control chains being connected in parallel to said trainline and including only independent means so that said pneumatic and electropneumatic chains have no common failure mode between each other.

4. The unit according to any one of claims 1 to 3, **characterized in that**, said control chain being a first, fully-pneumatic, control chain consisted of first acquisition, processing and actuation means, said first control chain includes a cylinder adapted to move as a function of the pressure difference between chambers, the pressure in a first chamber being a reference pressure, referred to as closing pressure, the pressure in a second chamber being directly the pressure of the trainline, said cylinder actuating a draining valve through a calibrated hole producing single or multiple operations of draining of the trainline.

5. The unit according to any one of claims 1 to 4, **characterized in that**, said control chain being a second, electropneumatic, control chain consisted of second acquisition, processing and actuation means, said second control chain includes at least one monostable electropneumatic valve adapted to produce a draining operation, and a processing unit adapted to actuate said at least one electropneumatic valve producing, through a calibrated hole, single or multiple operations of draining of the trainline as a function of a brake-control electric signal generated by said second acquisition means.

6. The unit according to claim 5, **characterized in that**, in addition to the brake-control electric signal, said processing element actuates said at least one electropneumatic valve as a function of data belonging to the following:
- the operation of the first pneumatic chain as measured by internal sensors;
- initial parameters stored in the memorizing means of said processing unit;
- measurements performed by complementary internal sensors and actuation buttons provided on said unit;
- measurements performed by sensors that are external to said unit, the latter being then equipped with receiving means; and
- device test sequences.

7. The unit according to any one of claims 1 to 6, **characterized in that**, said control chain being a second, electropneumatic, control chain, said unit comprises wake-up means controlled by a predefined variation of the pressure in the trainline, waking up electric circuits of said second control chain.

8. The unit according to one of claims 1 to 7, **characterized in that**, said control chain being a second, electropneumatic, control chain, said unit includes a power converter producing an electric power from the draining of the trainline generated by said unit.

9. The unit according to one of claims 1 to 8, **characterized in that** it includes a video sensor allowing the visualization of a portion of track located at the rear of said last wagon.

10. A device for detecting the integrity of a train, **characterized in that** it includes an end-of-train unit according to any one of claims 1 to 9, said unit being fixed to a train whose integrity is desired to be determined, and **in that** the device further includes correlation means adapted to collect information at the end of said train, generated by said unit, and to compare it with information at the head of said train and to produce information that are useful for checking the integrity of the train.

11. A method of end-of-train draining of a trainline extending along a train, the locomotive-side end of said trainline being pneumatically connected to a draining means adapted to generate in said trainline a variation of pressure that leads to the actuation of the brake system equipping each wagon of said train, **characterized in that** said method includes the steps of acquiring the single measurement of a variation of pressure in the trainline generated by the locomotive, processing said measurement and actuating a draining of said trainline as a function of the variation of pressure in said trainline.

12. The method according to claim 11, **characterized in that**, a measurement of the variation of pressure in the trainline followed by a calibrated draining generated by said measurement constituting a draining cycle, said method consists in a succession of draining cycles as long as the variation of pressure in the trainline evolves so as to produce a measurement generating a draining operation.
